Europäisches Patentamt

European Patent Office

Office européen des brevets

(19)

(11) EP 0 891 049 A1

(12) **DEMANDE DE BREVET EUROPEEN**

(43) Date de publication:
**13.01.1999 Bulletin 1999/02**

(51) Int Cl.6: **H04B 7/08**

(21) Numéro de dépôt: **98401767.3**

(22) Date de dépôt: **13.07.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **11.07.1997 FR 9708892**

(71) Demandeur: **ALCATEL ALSTHOM COMPAGNIE GENERALE D'ELECTRICITE**
**75008 Paris (FR)**

(72) Inventeurs:
• **Bejjani, Elie**
  **75020 Paris (FR)**
• **Bouquier, Jean-François**
  **75004 Paris (FR)**
• **Kumar, Vinod**
  **75005 Paris (FR)**

(74) Mandataire: **El Manouni, Josiane et al**
**Compagnie Financiere Alcatel,**
**DPI,**
**30, avenue Kléber**
**75116 Paris (FR)**

(54) **Procédé d'estimation de la dispersion angulaire d'un signal transmis par un émetteur à un récepteur et récepteur correspondant**

(57) L'invention concerne notamment un procédé d'estimation de la dispersion angulaire d'un signal transmis par un émetteur et reçu par un récepteur.

Selon l'invention, le procédé consiste à estimer la dispersion angulaire à partir de la seule observation d'une donnée ($VAR_z$, $VAR_x$) représentative, sur au moins une période de temps donnée, d'une variable liée aux seules amplitudes ou puissances des signaux reçus par chaque élément d'antenne ($20_0$ à $20_{M-1}$) d'un réseau d'antennes (100) prévu au niveau du récepteur.

FIG_10

EP 0 891 049 A1

**Description**

Le domaine de l'invention est celui des systèmes de transmission par canal radio, notamment de type cellulaire. Plus précisément, la présente invention concerne un procédé consistant à estimer la dispersion angulaire ("angular spread" en anglais) d'un signal transmis par un émetteur à un récepteur.

L'invention peut avantageusement être appliquée dans un réseau de transmission de type SDMA ("Space Division Multiple Access" en anglais). L'invention concerne également un récepteur mettant en oeuvre ce procédé.

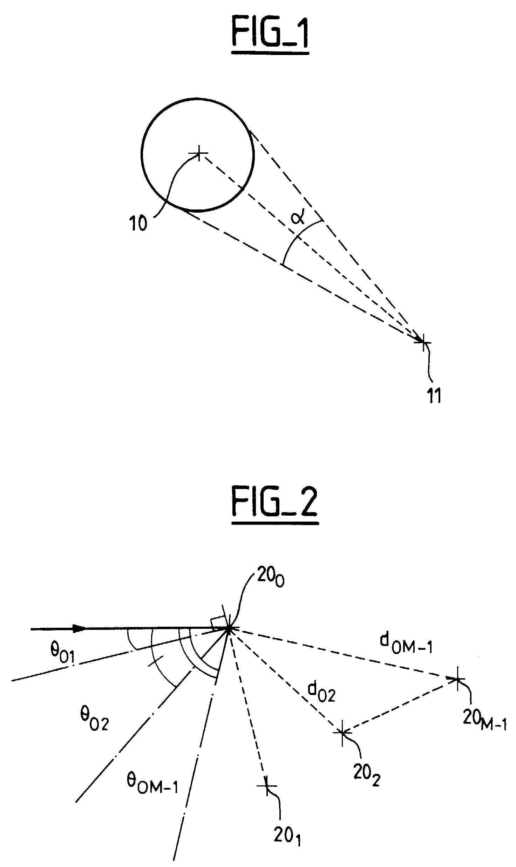

La description suivante est placée dans le cadre de la détermination de la dispersion angulaire d'un signal transmis entre un émetteur et un récepteur. Comme montré sur la figure 1, lorsqu'un émetteur 10 émet un signal à l'attention d'un récepteur 11, les multi-trajets dus à la présence d'obstacles aux environs de l'émetteur 10 engendrent une dispersion angulaire du signal transmis. Cette dispersion angulaire est caractérisée par un angle $\alpha$ en première approximation d'autant plus important que l'émetteur 10 est proche du récepteur 11.

De manière générale, pour tout récepteur recevant un signal émis par un émetteur, qu'il fassent ou non partie d'un réseau cellulaire, la connaissance de la dispersion angulaire est un paramètre important qu'il convient de prendre en compte. A titre d'exemple, il est souhaitable d'adapter l'algorithme d'égalisation du signal reçu au niveau du récepteur 11 à partir de la valeur de la dispersion angulaire $\alpha$. Cette adaptation a notamment pour but d'utiliser un algorithme d'égalisation puissant en cas de dispersion angulaire importante, et réciproquement.

Par ailleurs, lorsque la dispersion angulaire est importante, par exemple dans le cas d'une transmission de type SDMA dans une cellule d'un réseau cellulaire - le récepteur 11 étant alors constitué par une station de base et l'émetteur 10 classiquement par un terminal mobile - il n'est pas possible d'associer un angle d'arrivée du signal (DOA pour Direction Of Arrival) précis et donc de former un lobe en direction de l'émetteur 10. Le facteur de réutilisation est alors important. Plus précisément, dans le cas d'une transmission de type SDMA, la formation de lobes en direction de l'émetteur ne peut pas être réalisée lorsque cet émetteur est proche de la station de base, c'est à dire lorsque la valeur de a est importante.

Il est donc souhaitable, pour ces raisons notamment, de connaître la valeur de la dispersion angulaire a au niveau du récepteur 11.

Différentes techniques d'estimation de la valeur de $\alpha$ existent. Habituellement, le récepteur comporte un réseau d'éléments d'antenne recevant chacune le signal transmis, ce réseau étant couplé à des moyens de calcul de la dispersion angulaire. Le principal inconvénient des techniques connues est qu'elles nécessitent toutes un important traitement du signal reçu. A titre d'exemple, des algorithmes de type MUSIC ou ESPRIT permettent de déterminer la dispersion angulaire d'un signal reçu mais ils nécessitent des calculs de matrices de covariance, ces calculs requérant une importante puissance de calcul. Un autre inconvénient est que le signal reçu doit être observé sur une longue période de temps. De plus, ces algorithmes manquent de robustesse en termes de convergence.

La présente invention a notamment pour objectif de remédier à ces inconvénients.

Plus précisément, un des objectifs de l'invention est de fournir un procédé d'estimation de la dispersion angulaire d'un signal transmis par un émetteur à un récepteur, ce procédé étant aisé à mettre en oeuvre et ne nécessitant qu'une puissance de traitement réduite.

Un autre objectif de l'invention est de fournir un récepteur comprenant des moyens d'estimation de cette dispersion angulaire.

Ces objectifs, ainsi que d'autres qui apparaîtront par la suite, sont atteints grâce à un procédé d'estimation de la dispersion angulaire d'un signal transmis par un émetteur et reçu par un récepteur, le procédé consistant à estimer la dispersion angulaire à partir de la seule observation d'une donnée représentative, sur au moins une période de temps donnée, d'une variable liée aux seules amplitudes ou puissances des signaux reçus par chaque élément d'antenne d'un réseau d'antennes prévu au niveau du récepteur.

Dans un premier mode de mise en oeuvre, cette donnée est une moyenne des variances des différences des amplitudes des signaux reçus par les éléments d'antenne, les différences étant calculées en considérant deux à deux les éléments d'antenne.

Dans un deuxième mode de mise en oeuvre, cette donnée est une moyenne des variances des amplitudes des signaux reçus par chacun des éléments d'antenne.

Dans une application préférentielle, l'émetteur est un terminal mobile et le récepteur une station de base d'un réseau de transmission cellulaire.

Une transmission de type SDMA est avantageusement réalisée dans le réseau de transmission cellulaire.

La dispersion angulaire estimée est préférentiellement comparée avec une valeur de référence pour valider ou non une transmission en mode SDMA avec l'émetteur.

Selon une variante, la donnée est comparée avec une valeur de référence pour valider ou non une transmission en mode SDMA avec l'émetteur.

L'invention concerne également un récepteur comprenant un réseau d'antennes destiné à permettre l'estimation de la dispersion angulaire d'un signal reçu au niveau du réseau d'antennes, ce récepteur comportant des moyens fournissant une donnée représentative d'une variable liée aux seules amplitudes ou puissances des signaux reçus par chaque élément d'antenne du réseau.

Le récepteur comporte avantageusement en outre des moyens de conversion fournissant la valeur de la dispersion angulaire.

D'autres caractéristiques et avantages de l'invention apparaîtront à la lecture de la description suivante d'un mode de réalisation préférentiel, donné à titre illustratif et non limitatif, et des dessins annexés dans lesquels :

- la figure 1 est un schéma montrant la dispersion angulaire d'un signal transmis d'un émetteur à un récepteur ;
- la figure 2 est une vue de dessus d'un réseau d'antennes ;
- la figure 3 représente la dispersion angulaire de la puissance d'une composante reçue au niveau d'une antenne du réseau d'antenne ;
- la figure 4 représente la moyenne des variances des différences de puissance obtenues sur des couples d'éléments d'antenne d'un réseau d'antennes en fonction de la dispersion angulaire, pour différents angles d'arrivée moyens ;
- la figure 5 représente une station de base d'un réseau fonctionnant en SDMA et une zone dans laquelle une transmission en mode SDMA n'est plus possible ;
- la figure 6 montre le résultat d'une simulation de la probabilité que la valeur de la dispersion angulaire calculée selon une première méthode de calcul selon l'invention est supérieure à une valeur de référence, cette probabilité étant fonction de la dispersion angulaire ;
- la figure 7 montre le résultat d'une autre simulation de la probabilité que la valeur de la dispersion angulaire calculée selon cette première méthode de calcul est supérieure à une valeur de référence, cette probabilité étant également fonction de la dispersion angulaire ;
- la figure 8 représente la moyenne des variances des puissances obtenues sur les éléments d'antenne d'un réseau d'antennes en fonction de la dispersion angulaire, pour différents angles d'arrivée moyens ;
- la figure 9 montre le résultat d'une simulation de la probabilité que la valeur de la dispersion angulaire calculée selon une deuxième méthode de calcul selon l'invention est supérieure à une valeur de référence, cette probabilité étant fonction de la dispersion angulaire ;
- la figure 10 montre un récepteur mettant en oeuvre le procédé selon l'invention.

La figure 1 a été décrite précédemment en référence à l'état de la technique.

L'invention propose d'exploiter les propriétés statistiques des fluctuations spatiales et temporelles d'amplitude ou de puissance des signaux reçus par un réseau d'antennes prévu au niveau du récepteur. Le réseau d'antennes comporte un nombre M d'au moins deux antennes, par exemple M = 12. Le réseau peut être de type tridimensionnel mais, pour des raisons de simplification, nous considérerons par la suite un réseau plan (2 dimensions) et les antennes équitablement espacées.

Si l'on considère que le signal transmis par l'émetteur est noté $s(t)$ et que ce signal a une longueur d'onde $\lambda$, chaque antenne du réseau reçoit un ensemble de signaux confinés dans l'angle $\alpha$, comme montré sur la figure 2. Sur cette figure, les antennes sont notées $20_0$ à $20_{M-1}$.

Sur cette figure, $d_{0n}$ (avec n compris entre 0 et M-1) correspond à la distance entre l'antenne $20_0$ et l'antenne $20_n$ du réseau. La grandeur $\theta_{0n}$ correspond à l'angle formé entre la direction d'arrivée moyenne du signal et la normale au segment de droite reliant les antennes $20_0$ et $20_n$. On note les valeurs particulières :

$$d_{00} = 0 \text{ et } \theta_{00} = 0$$

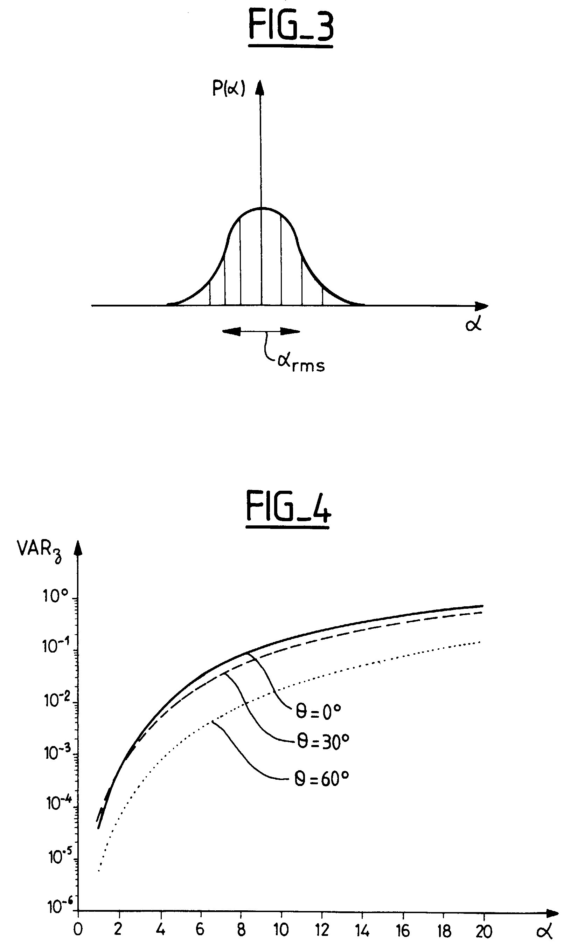

Si l'on note $P(\alpha)$ la distribution angulaire de la puissance moyenne arrivant d'une direction moyenne $\theta$, $P(\alpha)$ est caractérisée par un paramètre $\alpha_{rms}$ (avec rms pour "Root Mean Square") représenté sur la figure 3.

Comme chaque variable a a une valeur moyenne nulle (Gaussienne), on a :

$$\alpha_{rms} = \frac{1}{\alpha} \sqrt{\int \alpha^2 P^2(\alpha) d\alpha}$$

On peut en pratique considérer un nombre N discret de composantes distinctes reçues correspondant à N angles discrets $\alpha_i$. En conséquence, on peut déterminer l'expression générale du signal reçu au niveau des N éléments d'antenne du réseau d'antennes :

$$x_n(t) = \sum_{i=1}^{N} g_i(t)s(t-\tau_i)e^{2j\pi\frac{d_0n}{\lambda}\sin(\theta_0 n + \alpha_i)} + b_n(t)$$

pour n allant de 0 à M-1

avec $g_i(t)$ le gain complexe de la composante i et $\tau_i$ son retard relatif et $b_n(t)$ le bruit.

On rappelle que :

$$E[|g_i(t)|^2] = P(\alpha_i)$$

On considérera donc par la suite l'amplitude du signal reçu au niveau de chaque élément d'antenne :

$$X_n = \sqrt{\int_0^T |x_n(t)|^2 dt}$$

pour n allant de 0 à M-1

ou alors plus simplement la puissance du signal reçu au niveau de chaque élément d'antenne $X_n^2$.

Plus précisément, l'invention propose d'estimer la dispersion angulaire d'un signal transmis par un émetteur et reçu par un récepteur à partir de la seule observation d'une donnée représentative, sur au moins une période de temps donnée, d'une variable liée aux seules amplitudes ou puissances des signaux reçus par chaque élément d'antenne du réseau d'antennes prévu au niveau du récepteur. En pratique un nombre B de mesures successives seront réalisées sur les M éléments d'antenne, comme il sera vu par la suite.

On constate que les propriétés statistiques des puissances des composantes reçues par les éléments d'antenne sont directement liées à la valeur de la dispersion angulaire $\alpha_{rms}$. Toute combinaison des puissances mesurées est caractérisée par un modèle statistique qui peut être identifié pour être ensuite utilisé comme estimateur de la dispersion angulaire. En fonction de l'application envisagée de cette estimation, il est possible de déterminer une combinaison des puissances menant à un modèle statistique approprié.

On considérera par la suite un bruit de type Gaussien de variance $\sigma_n^2$ (non nécessairement égal). Dans des cas particuliers (par exemple en cas de transmission de séquences d'apprentissage connues), il est à noter que la contribution du bruit peut être supprimée plus ou moins parfaitement. Dans d'autres cas, même si la puissance de bruit ne peut être supprimée, les solutions proposées ci-après présentent des performances significatives. A titre d'exemple, la première méthode proposée permet d'éliminer la variance du bruit si cette variance est la même pour tous les éléments d'antenne.

Différentes mises en oeuvre du procédé de l'invention sont données par la suite. Dans toutes ces mises en oeuvre il est supposé, pour l'établissement des simulations, que le bruit est de type Gaussien, que le canal de transmission est un canal de Rayleigh, que le profil de puissance angulaire distribuée est uniforme (P(a) est constant), que N (nombre de multi-trajets) est égal à 10 et que le réseau d'antennes est un réseau plan comprenant un nombre M = 12 d'éléments d'antenne tous séparés l'un de l'autre d'une distance $d/\lambda = 0,5$. De plus, dans toutes les simulations, la direction moyenne d'arrivée θ est uniformément distribuée dans un secteur allant de -60° à +60° par rapport à la normale du réseau d'antennes.

Première méthode

La première méthode consiste à déterminer la dispersion angulaire du signal reçu au niveau d'un réseau comprenant une pluralité d'éléments d'antenne. Cette méthode consiste à déterminer une donnée qui est une moyenne des variances des différences des amplitudes des signaux reçus par les éléments d'antenne, ces différences étant calculées en considérant deux à deux les éléments d'antenne.

Plus précisément, on considère un jeu de variables $Z_n$ définies comme suit :

$$Z_n = X_n - X_{n+1} \qquad \text{pour n variant de 0 à M-2}$$

On obtient ainsi un jeu de variables $Z_n$ représentatives chacune des différences des puissances (ou amplitudes) des signaux reçus sur deux antennes espacées de $d/\lambda$. La moyenne des variances $VAR_z$ de ces différences en fonction de la dispersion angulaire est représentée sur la figure 4, pour des angles $\theta$ discrets égaux à 0° (correspondant à un émetteur situé en face du réseau d'antennes), ±30° et ±60°.

On constate, que pour chaque valeur de $\theta$ on peut déterminer une et une seule valeur de a à partir de $VAR_z$. Une relation bi-univoque est ici établie. On notera également une faible dispersion des valeurs de a en fonction de $VAR_z$ pour des angles $\theta$ compris entre ±30°, ce qui correspond à une couverture d'un angle de 60°.

Les relations suivantes sont ici utilisées :

$$VAR_z = \frac{1}{B} \sum_{b=1}^{B} VAR_z^b$$

avec

$$VAR_z^b = \frac{1}{M-1} \sum_{n=0}^{M-2} (Z_{n,b} - \bar{Z}_b)^2 \quad \text{et} \quad \bar{Z}_b = \frac{1}{M-1} \sum_{n=0}^{M-2} Z_{n,b}$$

En d'autres termes, $VAR_z$ est la moyenne des B variances, chacune de ces variances étant évaluée à partir des M-1 différences $Z_{n,b}$ calculées pour une analyse b.

La valeur de B est préférentiellement importante, comme il sera vu ci-dessous dans la méthode 2. Ceci mène à l'établissement d'une matrice de M-1 lignes et de B colonnes des variables $Z_{n,b}$ (n le signal et b l'occurrence) avec b allant de 1 à B.

Application de la méthode 1

La méthode 1 est avantageusement appliquée à l'indication de la probabilité que la valeur de la distribution angulaire calculée (ou alors que la valeur de $VAR_z$ calculée) est supérieure à une valeur de référence. Cette valeur de référence est notée $\alpha_{ref}$ (ou alors $VAR_{ref}$). Cette probabilité est directement liée à la précision de l'estimation réalisée. Idéalement, cette probabilité est nulle lorsque l'estimation est inférieure à la valeur de seuil et égale à 1 lorsque l'estimation est supérieure à la valeur de seuil. Cette probabilité est par la suite appelée probabilité de bonne détection.

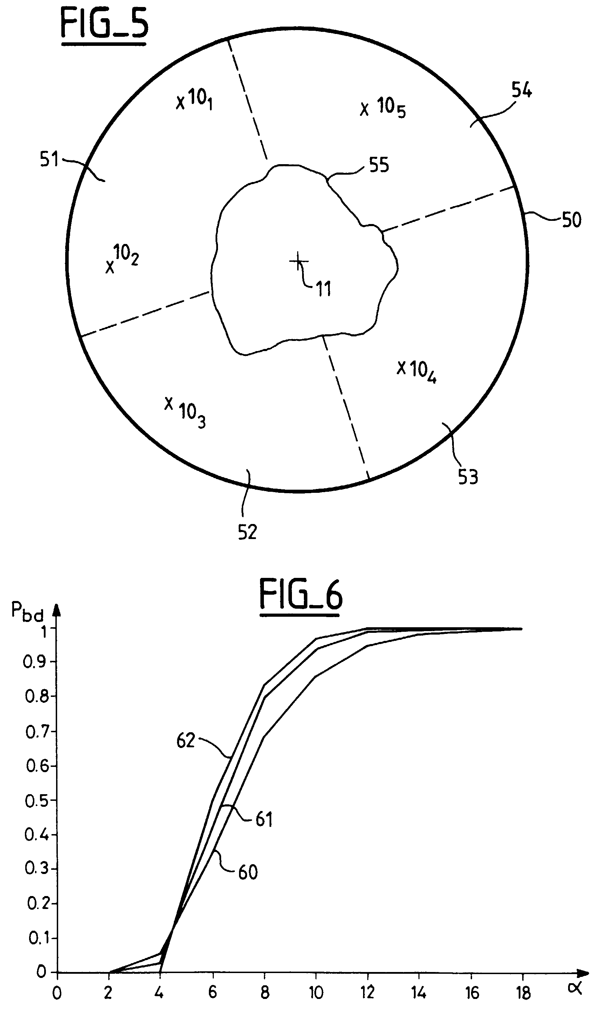

Plus précisément, dans le cadre d'une application de l'invention à un réseau de transmission SDMA, il est nécessaire de connaître la valeur de la dispersion angulaire des signaux émis par des terminaux à l'attention d'une station de base, comme montré sur la figure 5.

La figure 5 représente une station de base d'un réseau fonctionnant en SDMA (par exemple de type GSM ou CDMA) et une zone en-deçà de laquelle une transmission en mode SDMA n'est plus possible.

La station de base est notée 11 et assure la couverture d'une cellule 50, idéalement circulaire. Une transmission avec des terminaux $10_1$ à $10_5$, par exemple mobiles, en mode SDMA suppose que cette station de base 11 soit capable de former des lobes en direction des terminaux $10_1$ à $10_5$. Cette formation de lobes permet ici de former quatre secteurs 51 à 54, les ressources de transmission utilisées dans ces secteurs pouvant être les mêmes (même fréquence porteuse et même code d'étalement en transmission CDMA ou allocation du même intervalle de temps en mode TDMA). Ainsi, le terminal $10_1$ par exemple peut utiliser le même canal de transmission que le terminal $10_4$, puisqu'ils sont situés dans des secteurs différents. On définit une zone 55 entourant la station de base 11 dans laquelle cette transmission en mode SDMA n'est pas possible car la dispersion angulaire y est trop forte : il n'est pas possible, en raison des lobes secondaires des antennes d'émission de la station de base 11, d'adresser des données à un terminal se trouvant à l'intérieur de la zone 55 sans qu'un autre terminal partageant la même ressource de reçoive ces données qui ne lui sont pas destinées. Il y a alors brouillage des communications.

Il est donc important de détecter si un terminal est situé à l'intérieur ou à l'extérieur de la zone 55. Pour cela, l'invention propose d'utiliser comme critère de présence ou d'absence d'un terminal dans la zone 11 la valeur de la dispersion angulaire obtenue par exemple par la méthode 1. Si la valeur de $\alpha$ obtenue est inférieure à une valeur de référence $\alpha_{ref}$, le terminal concerné est considéré comme situé à l'extérieur de la zone 11, alors que si la valeur de a est supérieure à cette valeur de référence $\alpha_{ref}$, le terminal concerné est considéré comme situé à l'intérieur de la zone 11. La valeur de $\alpha_{ref}$ correspond donc à la dispersion angulaire des signaux émis par des terminaux situés à proximité immédiate du pourtour de la zone 11.

La notion de probabilité de bonne détection de la valeur de dispersion angulaire mentionnée précédemment correspond précisément à ce critère car elle permet de déterminer la pertinence de la méthode employée pour la détermination de cette dispersion angulaire.

A titre d'exemple, la figure 6 montre une simulation de la probabilité $P_{bd}$ de bonne détection en fonction de la dispersion angulaire (obtenue selon la méthode 1), pour une valeur de référence $\alpha_{ref}$ égale à 7, ce qui correspond environ à $VAR_z$ égal à 0,03 (voir figure 4).

Trois caractéristiques 60, 61, 62 sont représentées, correspondant respectivement à B = 3, B = 10 et B = 30. On constate que la pente, et donc les performances, augmentent avec le nombre d'échantillons de mesure B pris en compte.

Variante d'application de la méthode 1

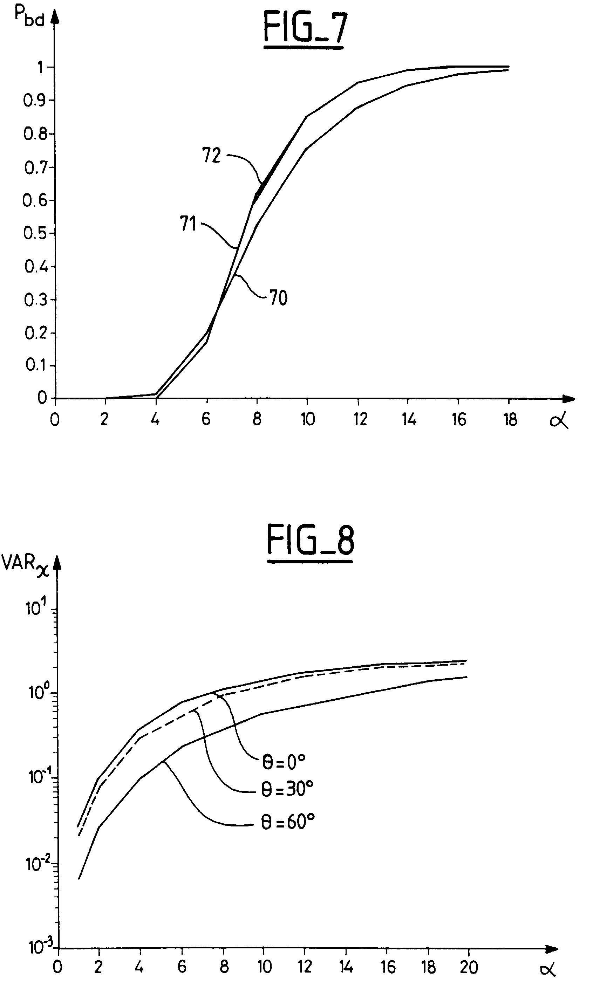

Une variante d'application de la méthode 1 consiste, plutôt que de comparer la moyenne des B variances à une valeur de référence, à procéder à un vote majoritaire en utilisant les B différentes décisions basées sur $VAR_z^b$ (variance des différences de puissance obtenues sur deux éléments d'antenne voisins). Chacune des valeurs $VAR_z^b$ est comparée à la même valeur de référence et après chaque b réalisation, un vote majoritaire est lancé pour déterminer si le nombre de comparaisons pour lesquelles la réponse a été "oui" est supérieur ou non au nombre de comparaisons pour lesquelles la réponse a été "non". On construit ainsi les caractéristiques de la figure 7, avec $P_{bd}$ la probabilité de bonne détection.

Les caractéristiques 70, 71 et 72 sont respectivement obtenues pour B = 3, B = 10 et B = 30. On constate que les caractéristiques 71 et 72 sont confondues, ce qui signifie que le gain en précision n'est plus amélioré lorsque B devient supérieur à 10. Hormis ce fait, les performances sont comparables à celles de l'application de la méthode 1.

Méthode 2

La deuxième méthode proposée repose également sur l'observation d'une donnée représentative d'une variable liée aux amplitudes des signaux reçus par chaque élément d'antenne. Cependant, cette donnée n'est pas comme dans la méthode 1 la valeur de $VAR_z$ mais une moyenne $VAR_x$ des variances des amplitudes (ou puissances) des signaux reçus par chaque élément d'antenne. Il n'y a donc pas dans cette méthode 2 de soustraction des amplitudes des signaux reçus par deux éléments d'antenne.

Plus précisément, on définit :

$$VAR_x^b = \frac{1}{M} \sum_{n=0}^{M-1} (X_{n,b} - \bar{X}_b)^2 \quad \text{et} \quad \bar{X}_b = \frac{1}{M} \sum_{n=0}^{M-1} X_{n,b}$$

La valeur de b va de 1 à B (B mesures successives). La moyenne des variances $VAR_x^b$ est notée $VAR_x$.

La figure 8 représente la moyenne $VAR_x$ des variances des puissances obtenues sur les éléments d'antenne d'un réseau d'antennes en fonction de la dispersion angulaire $\alpha$, pour différents angles d'arrivée moyens $\theta$.

On observe ici aussi une relation bi-univoque entre $VAR_x$ et $\alpha$, ainsi qu'une faible dispersion de l'estimation pour des angles $\theta$ compris entre $\pm 30°$.

Application de la méthode 2

Comme dans la première application de la méthode 1, il est intéressant, par exemple dans un contexte de transmission dans un réseau SDMA, de comparer la moyenne des variances calculées avec une valeur de référence $VAR_{ref}$ ou $\alpha_{ref}$ pour déterminer une probabilité de bone détection $P_{bd}$.

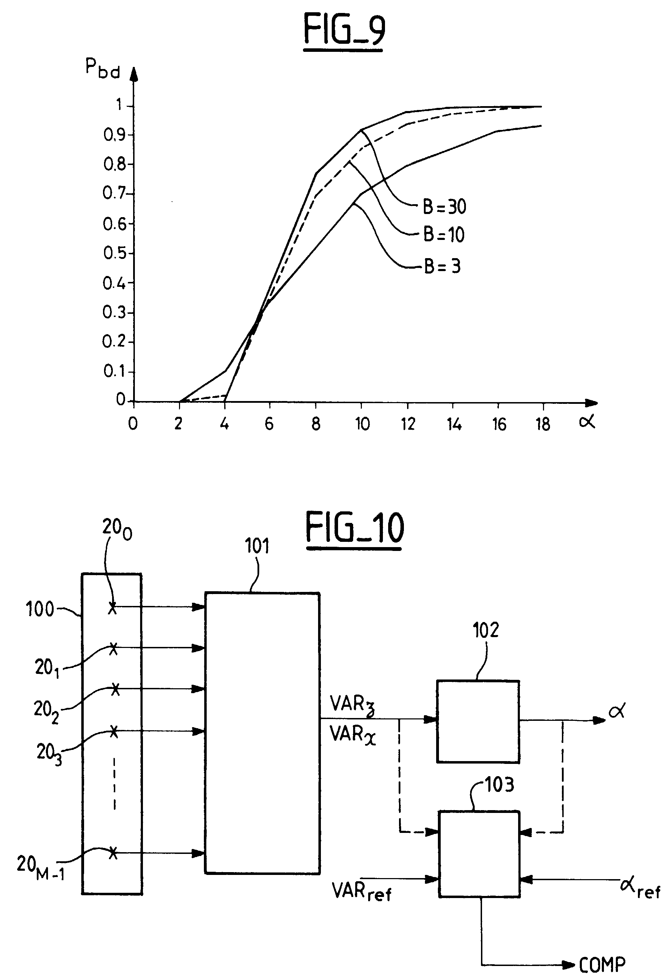

La figure 9 représente cette probabilité $P_{bd}$ en fonction de la dispersion angulaire a calculée pour B analyses, B étant égal à 3, 10 ou 30. La valeur de référence utilisée est $\alpha_{ref} = 7$, ce qui correspond à $VAR_{ref} = 0,75$. On observe également une amélioration des performances lorsque B augmente.

Réalisation pratique

L'invention concerne également un récepteur mettant en oeuvre le procédé décrit précédemment. La figure 10 montre un tel récepteur.

Un réseau d'antennes 100 comporte une pluralité d'éléments d'antenne $20_0$ à $20_{M-1}$. Chaque élément d'antenne est relié à des moyens de traitement 101 fournissant une donnée ($VAR_z$ ou $VAR_x$ par exemple, selon la méthode employée) représentative d'une variable liée aux seules amplitudes ou puissances des signaux reçus par chaque élément d'antenne du réseau 100. Cette donnée est ensuite appliquée à des moyens de conversion 102 fournissant la valeur de la dispersion angulaire a. Les moyens de traitement 101 assurent le cas échéant la séparation des canaux dans le cas d'une transmission en mode CDMA.

A titre subsidiaire, comme indiqué précédemment, la valeur de $VAR_z$ ($VAR_x$) ou alors celle de $\alpha$ peut être comparée à une valeur de seuil $VAR_{ref}$ ou $\alpha_{ref}$ dans des moyens de comparaison 103 fournissant un signal de comparaison COMP indicatif de la réalisation ou de la non-réalisation de l'équation $VAR_z$ (ou $VAR_x$) $< VAR_{ref}$ ou alors $\alpha < \alpha_{ref}$.

La présence de ces moyens de comparaison est particulièrement intéressante dans le cas d'une application à un récepteur destiné à fonctionner en mode SDMA.

L'invention s'applique non seulement à l'estimation de la dispersion angulaire d'un signal reçu par un récepteur, mais tout particulièrement aux stations de base de réseaux cellulaires, qu'ils soient de type GSM, CDMA ou autre, afin de permettre une réutilisation des ressources de transmission (SDMA).

## Revendications

1. Procédé d'estimation de la dispersion angulaire (a) d'un signal transmis par un émetteur et reçu par un récepteur, ledit procédé consistant à estimer ladite dispersion angulaire ($\alpha$) à partir de la seule observation d'une donnée ($VAR_z$, $VAR_x$) représentative, sur au moins une période de temps donnée, d'une variable liée aux seules amplitudes ou puissances des signaux reçus par chaque élément d'antenne ($20_0$ à $20_{M-1}$) d'un réseau d'antennes (100) prévu au niveau dudit récepteur.

2. Procédé selon la revendication 1, caractérisé en ce que ladite donnée est une moyenne des variances des différences des amplitudes des signaux reçus par lesdits éléments d'antenne, lesdites différences étant calculées en considérant deux à deux lesdits éléments d'antenne.

3. Procédé selon la revendication 1, caractérisé en ce que ladite donnée est une moyenne des variances des amplitudes des signaux reçus par chacun desdits éléments d'antenne.

4. Procédé selon l'une des revendications 1 et 2, caractérisé en ce que ledit émetteur est un terminal mobile et en ce que ledit récepteur est une station de base d'un réseau de transmission cellulaire.

5. Procédé selon la revendication 4, caractérisé en ce qu'une transmission de type SDMA est réalisée dans ledit réseau de transmission cellulaire.

6. Procédé selon l'une des revendications 1 à 5, caractérisé en ce que ladite dispersion angulaire ($\alpha$) estimée est comparée avec une valeur de référence ($\alpha_{ref}$) pour valider ou non une transmission en mode SDMA avec ledit émetteur.

7. Procédé selon l'une des revendications 1 à 5, caractérisé en ce que ladite donnée ($VAR_z$, $VAR_x$) est comparée avec une valeur de référence ($VAR_{ref}$) pour valider ou non une transmission en mode SDMA avec ledit émetteur.

8. Récepteur comprenant un réseau d'antennes (100) destiné à permettre l'estimation de la dispersion angulaire d'un signal reçu au niveau dudit réseau d'antennes, caractérisé en ce qu'il comporte des moyens (101) fournissant une donnée ($VAR_z$, $VAR_x$) représentative d'une variable liée aux seules amplitudes ou puissances des signaux reçus par chaque élément d'antenne dudit réseau (100).

9. Récepteur selon la revendication 8, caractérisé en ce qu'il comporte en outre des moyens de conversion (102) fournissant ladite valeur de ladite dispersion angulaire ($\alpha$).

# FIG_1

# FIG_2

## FIG_3

## FIG_4

## FIG_5

## FIG_6

## FIG_7

## FIG_8

## FIG_9

## FIG_10

EP 0 891 049 A1

Office européen
des brevets

**RAPPORT DE RECHERCHE EUROPEENNE**

Numéro de la demande

EP 98 40 1767

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | P. EGGERS: "Angular dispersive mobile radio environments sensed by highly directive base station antennas" IEEE PIMRC' 95, vol. 2, 27 - 29 septembre 1995, pages 522-526, XP002063445 CANADA | 1,3-5,8,9 | H04B7/08 |
| Y | * page 522, colonne de droite, ligne 20 - ligne 36 * <br> * page 524, colonne de gauche, ligne 1 - colonne de droite, ligne 44 * <br> * figure 5 * | 6,7 | |
| X | P. MOGENSEN ET AL.: "Preliminary measurement results from an adaptive antenna array testbed for GSM/UMTS" IEEE VTC' 97, vol. 3, 4 - 7 mai 1997, pages 1592-1596, XP002063446 USA | 1,3-5,8,9 | |
| A | * abrégé * <br> * page 1593, colonne de gauche, ligne 1 - page 1595, colonne de gauche, ligne 3 * <br> * figures 3-5 * | 2 | DOMAINES TECHNIQUES RECHERCHES (Int.Cl.6) <br><br> H04B <br> H01Q |
| Y | EP 0 729 285 A (SEL ALCATEL AG ;ALCATEL NV (NL)) 28 août 1996 <br> * abrégé * <br> * revendications 1-3 * <br> * figures 1A,1B,3C,4 * | 6,7 | |

Le présent rapport a été établi pour toutes les revendications

| Lieu de la recherche | Date d'achèvement de la recherche | Examinateur |
|---|---|---|
| LA HAYE | 21 octobre 1998 | Lazaridis, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

13